# EUROPEAN PATENT SPECIFICATION

(11) **EP 3 545 451 B1**
(45) Date of publication and mention of the grant of the patent: **05.01.2022**
(21) Application number: 17873015.6
(22) Date of filing: 22.11.2017
(51) Int. Cl.: G06F 21/30, H04L 29/06, H04L 29/08

(54) **AUTOMATIC FORWARDING OF ACCESS REQUESTS AND RESPONSES THERETO**
AUTOMATISCHE WEITERLEITUNG VON ZUGRIFFSANFRAGEN UND ANTWORTEN DARAUF
TRANSFERT AUTOMATIQUE DE DEMANDES D'ACCÈS ET DE RÉPONSES À CES DERNIÈRES

(30) Priority: 22.11.2016 US 201662425092 P
(43) Date of publication of application: 02.10.2019
(73) Proprietor: Silverfort Ltd., 6473926 Tel Aviv (IL)
(72) Inventor: FATTAL, Matan Binyamin, 4333972 Raanana (IL); KASSNER, Yaron, 4534815 Hod Hasharon (IL); KOVETZ, Hed, 2017000 Atzmon-Segev (IL); ZACH, Rotem, 4281500 Pardesiya (IL)
(74) Representative: Beck Greener LLP
(86) International application number: PCT/IB2017/057337
(87) International publication number: WO 2018/096471

(56) References cited:
- US-A1- 2005 278 384
- US-A1- 2012 173 759
- US-A1- 2013 007 239
- US-A1- 2015 200 943
- US-A1- 2016 088 022
- JUSTINE SHERRY ET AL: "Making middleboxes someone else's problem", APPLICATIONS, TECHNOLOGIES, ARCHITECTURES, AND PROTOCOLS FOR COMPUTER COMMUNICATION, ACM, 2 PENN PLAZA, SUITE 701 NEW YORK NY 10121-0701 USA, 13 August 2012 (2012-08-13), pages 13-24, XP058007984, DOI: 10.1145/2342356.2342359 ISBN: 978-1-4503-1419-0

## Description

The present invention relates generally to computer networks, and specifically to computer-network security.

US2017/0244730 describes an attack/unwanted activity detecting firewall for use in protecting authentication-based network resources. The system is adapted for installation inline or in sniffer mode. In various embodiments, defined rules are applied to network traffic to determine whether certain types of attacks are occurring on the network resources. If one such attack is detected, the system provides for several potential responses, including for example disconnecting the attacking remote machine, requiring the user at that machine to re-authenticate, and/or requiring a second factor of authentication from the user at that machine. In some example embodiments, regardless of any activity required of a user at the remote machine suspected of malicious behavior, the system generates an alarm or other alert for presentation as appropriate, such as via a graphical user interface or a third-party system using an API.

US2016/0014077 describes a method, system, and computer program product for protecting Directory Services (DS) by monitoring traffic to the DS; deciding to block a client access request in the monitored traffic originating from a network client; synthesizing an error message based at least in part on the client access request; and sending the synthesized error message to the network client, causing the network client to abort access request process such as an authentication process or an authorization process.

US9148405 describes a multifactor authentication (MFA) enforcement server that provides multifactor authentication services to users and existing services. During registration, the MFA enforcement server changes a user's password on an existing service to a password unknown to the user. During normal usage when the user accesses the existing service through the MFA enforcement server, the MFA enforcement server enforces a multifactor authentication enforcement policy.

The article entitled "Making Middleboxes Someone Else's Problem: Network Processing as a Cloud Service", in SIGCOMM '12: Proceedings of the ACM SIGCOMM 2012 conference on Applications, Technologies, Architectures, and Protocols for Computer Communication, by Justine Sherry et al., discloses the motivation, design, and implementation of Appliance for Outsourcing Middleboxes (APLOMB).

US2013007239 discloses the provision, transparently and seamlessly to any client or server, of layer 2 redirection of client requests to any services of a device deployed in parallel to an intermediary device.

In accordance with aspects of the present invention, there is provided a server, a method, and a computer software product as set out in the appending independent claims. Features of embodiments are set out in the appending dependent claims.

There is also disclosed herein examples of an apparatus that includes a network interface and a processor. The processor is configured to run a request-destination application and, by executing network-layer software that does not include the request-destination application, (i) receive, via the network interface, a request, originating from a request-origin device, to access a resource, the request being directed to the request-destination application, (ii) subsequently to receiving the request, decide to forward the request to a traffic-management server before communicating the request to the request-destination application, (iii) in response to the deciding, forward the request, over a computer network, to the traffic-management server, (iv) subsequently to forwarding the request, receive the request from the traffic-management server, and (v) subsequently to receiving the request from the traffic-management server, communicate the request to the request-destination application.

In some examples, the processor is configured to cause the traffic-management server to request authentication from a user of the request-origin device, by forwarding the request to the traffic-management server.

In some examples, the processor is further configured to, by executing the network-layer software receive, from the request-destination application, a response to the request, the response being directed to the request-origin device, subsequently to receiving the response, decide to forward the response to the traffic-management server before communicating the response to the request-origin device, in response to the deciding, forward the response, over the computer network, to the traffic-management server, subsequently to forwarding the response, receive the response from the traffic-management server, and subsequently to receiving the response from the traffic-management server, communicate the response to the request-origin device.

In some examples, the processor is configured to cause the traffic-management server to request authentication from a user of the request-origin device, by forwarding the response to the traffic-management server.

In some examples, the processor is configured to receive the response from the traffic-management server after the response has been modified by the traffic-management server.

In some examples, the processor is configured to receive the request from the traffic-management server after the request has been modified by the traffic-management server.

In some examples, the processor is configured to forward the request to the traffic-management server through a Virtual Private Network (VPN) tunnel.

In some examples, the resource is selected from the group of resources consisting of: a Kerberos Key Distribution Center, an NT Local Area Network Manager authentication handler, a Netlogon authentication handler, a Lightweight Directory Access Protocol directory service, and a webserver.

In some examples, the software includes a network address translator (NAT).

In some examples, the software includes port-forwarding software.

In some examples, the software includes a driver.

In some examples, the software includes routing software.

In some examples, the processor is further configured to communicate, to the traffic-management server, a health-test request, and subsequently to communicating the health-test request, by executing the network-layer software receive, from the traffic-management server, a test access-request message that simulates the request to access the resource, and forward the test access-request message to the traffic-management server.

There is also disclosed herein examples of another apparatus that includes a network interface and a processor. The processor is configured to run a request-destination application, and, by executing network-layer software that does not include the request-destination application, (i) receive, from the request-destination application, a response to a request to access a resource, the request originating from a request-origin device, and the response being directed to the request-origin device, (ii) subsequently to receiving the response, decide to forward the response to a traffic-management server before communicating the response to the request-origin device, (iv) in response to the deciding, forward the response via the network interface, over a computer network, to the traffic-management server, (v) subsequently to forwarding the response, receive the response from the traffic-management server, and (vi) subsequently to receiving the response from the traffic-management server, communicate the response to the request-origin device.

There is also disclosed herein examples of another apparatus that includes a network interface and a processor. The processor is configured to receive via the network interface, over a computer network, from one of a request-origin device and a request-destination device, a request, originating from the request-origin device, to access a resource, the request being directed to the request-destination device. The processor is further configured to process the received request, and, subsequently to processing the request, to return the request to the one of the request-origin device and the request-destination device.

In some examples, the processor is configured to receive the request from the request-destination device, and return the request to the request-destination device under an identifier of the request-origin device, such that the returned request appears, to the request-destination device, to have been received from the request-origin device.

In some examples, the processor is further configured to receive over the computer network, from the one of the request-origin device and the request-destination device, a response to the request, the response being directed to the request-origin device, process the received response, and subsequently to processing the response, return the response to the one of the request-origin device and the request-destination device.

In some examples, the processor is configured to, in processing the received response, decide, based on content of the received response, to request authentication from a user of the request-origin device, and the processor is further configured to, in response to the deciding, request the authentication.

In some examples, the one of the request-origin device and the request-destination device is a first one of the request-origin device and the request-destination device, and the processor is further configured to receive over the computer network, from a second one of the request-origin device and the request-destination device, a response to the request, the response being directed to the request-origin device, process the received response, and subsequently to processing the response, return the response to the second one of the request-origin device and the request-destination device.

In some examples, the processor is configured to, in processing the received request, decide, based on content of the received request, to deny the request, and the processor is further configured to receive over the computer network, from the one of the request-origin device and the request-destination device, a response indicating that the request was granted, the response being directed to the request-origin device, in response to the deciding, modify the response to indicate that the request was denied, and subsequently to modifying the response, return the response to the one of the request-origin device and the request-destination device.

In some examples, the processor is configured to, in processing the received request, decide, based on content of the received request, to request authentication from a user of the request-origin device, and the processor is further configured to, in response to the deciding, request the authentication.

In some examples, the processor is further configured to receive over the computer network, from the one of the request-origin device and the request-destination device, a response to the request, the response being directed to the request-origin device, and ascertain that the response indicates that the request was granted, and the processor is configured to request the authentication in response to the ascertaining.

In some examples, the processor is further configured to in response to not receiving the requested authentication, modify the response to indicate that the request was denied, and subsequently to modifying the response, return the response to the one of the request-origin device and the request-destination device.

In some examples, the processor is configured to, in processing the received request, modify the received request.

In some examples, the resource is selected from the group of resources consisting of: a Kerberos Key Distribution Center, an NT Local Area Network Manager authentication handler, a Netlogon authentication handler, a Lightweight Directory Access Protocol directory service, and a webserver.

In some examples, the processor is further configured to receive, from the one of the request-origin device and the request-destination device, a health-test request, and subsequently to receiving the health-test request, communicate, to the one of the request-origin device and the request-destination device, a test access-request message, which simulates the request to access the resource.

There is also disclosed herein examples of another apparatus that includes a network interface and a processor. The processor is configured to receive via the network interface, over a computer network, from one of a request-origin device and a request-destination device, a response to a request to access a resource, the request originating from the request-origin device, and the response being directed to the request-origin device. The processor is further configured to process the received response, and, subsequently to processing the response, to return the response to the one of the request-origin device and the request-destination device.

There is also disclosed herein examples of another apparatus that includes a network interface and a processor. The processor is configured to run a request-origin application, and, by executing network-layer software that does not include the request-origin application, (i) receive a request, originating from the request-origin application, to access a resource, the request being directed to a request-destination device, (ii) subsequently to receiving the request, decide to forward the request to a traffic-management server before communicating the request to the request-destination device, (iii) in response to the deciding, forward the request via the network interface, over a computer network, to the traffic-management server, (iv) subsequently to forwarding the request, receive the request from the traffic-management server, and (v) subsequently to receiving the request from the traffic-management server, communicate the request to the request-destination device.

There is also disclosed herein examples of a method that includes receiving, at a network layer of one of a request-origin device and a request-destination device, a request, originating from a request-origin application running on the request-origin device, to access a resource, the request being directed to a request-destination application running on the request-destination device. The method further includes, subsequently to receiving the request, by executing software that runs at the network layer, (i) deciding to forward the request to a traffic-management server before communicating the request to the request-destination application, (ii) in response to the deciding, forwarding the request from the network layer, over a computer network, to the traffic-management server, (iii) subsequently to forwarding the request, receiving the request, at the network layer, from the traffic-management server, and (iv) subsequently to receiving the request from the traffic-management server, communicating the request to the request-destination application.

There is also disclosed herein examples of another method that includes receiving from a request-destination application running on a request-destination device, at a network layer of one of a request-origin device and the request-destination device, a response to a request to access a resource, the request originating from a request-origin application running on the request-origin device, and the response being directed to the request-origin application. The method further includes, subsequently to receiving the response, by executing software that runs at the network layer, (i) deciding to forward the response to a traffic-management server before communicating the response to the request-origin application, (ii) in response to the deciding, forwarding the response from the network layer, over a computer network, to the traffic-management server, (iii) subsequently to forwarding the response, receiving the response, at the network layer, from the traffic-management server, and (iv) subsequently to receiving the response from the traffic-management server, communicating the response to the request-origin application.

There is also disclosed herein examples of another method that includes receiving over a computer network, by a traffic-management server, from one of a request-origin device and a request-destination device, a request, originating from the request-origin device, to access a resource, the request being directed to the request-destination device. The method further includes processing the received request, and, subsequently to processing the request, returning the request to the one of the request-origin device and the request-destination device.

There is also disclosed herein examples of another method that includes receiving over a computer network, by a traffic-management server, from one of a request-origin device and a request-destination device, a response to a request to access a resource, the request originating from the request-origin device, and the response being directed to the request-origin device. The method further includes processing the received response, and, subsequently to processing the response, returning the response to the one of the request-origin device and the request-destination device.

There is also disclosed herein examples of another method for handling a request to access a resource, the request originating from a request-origin device and being directed to a request-destination application running on a request-destination device. The method includes forwarding the request, from one of the request-origin device and the request-destination device, to a traffic-management server, before communicating the request to the request-destination application. The method further includes, using the traffic-management server, receiving the request from the one of the request-origin device and the request-destination device, processing the received request, and, subsequently to processing the request, returning the request to the one of the request-origin device and the request-destination device. The method further includes, using the one of the request-origin device and the request-destination device, receiving the returned request from the traffic-management server, and, subsequently to receiving the request from the traffic-management server, communicating the request to the request-destination application.

The present invention will be more fully understood from the following detailed description of embodiments thereof, taken together with the drawings, in which:
Fig. 1 is a schematic illustration of a system for managing access requests and the responses to such requests, in accordance with some embodiments of the present invention;
Fig. 2 is a schematic illustration of a flow of communication between a client, a server, and a traffic-management server, in accordance with some embodiments of the present invention;
Fig. 3 is a schematic illustration of an alternate flow of communication between the client, the server, and the traffic-management server, in accordance with some embodiments of the present invention; and
Fig. 4 is a schematic illustration of a flow diagram for a method for implementing a multi-factor authentication policy, in accordance with some embodiments of the present invention.

### OVERVIEW

Embodiments of the present invention include a system for automatically forwarding requests to access resources, and the responses to such requests, to a traffic-management server (TMS), before these messages are passed to their intended destinations. Examples of access requests that may be forwarded include a request by a client to access a Kerberos Key Distribution Center (KDC) on a Domain Controller (DC), a service on a computer network, or a remote server. Each of these requests may be forwarded by the client that generates the request, or by the server to which the request is directed. Further to receiving a forwarded access request, the TMS may ascertain relevant parameters of the request, such as the identity of the user who initiated the request, the requested resource, relevant networks addresses included in the request, and the time of the request. If appropriate, the TMS may modify the request, require additional authentication from the user, and/or apply any other security measures. Subsequently to processing the request, the TMS returns the request to the client or server, and the request is then passed to the relevant request-handling application.

Advantageously, the forwarding described herein is both initiated and performed by one or more modules (or "components") that are separate from the relevant applications that generate and respond to the access requests. Typically, these modules comprise hardware and/or software that operates at the network layer of the client or server that performs the forwarding. Thus, a single, central forwarding infrastructure may handle access requests (and responses) of multiple varying types, without the need for any modifications (or at least without the need for any significant modifications) to any of the applications that generate and respond to the access requests.

It is noted that in the context of the present application, including the claims, the "network layer" of a computing device refers to the lower-level subsystem of the computing device, including any combination of hardware and/or software components, that handles and processes network traffic. The network layer may include software that runs in the operating system kernel or in the user space, including, for example, software responsible for blocking or modifying received network packets. (This software may be described as "network-layer software," and may additionally be said to "run at the network layer." In some embodiments, this software includes hypervisor software.) Alternatively or additionally, the network layer may include any physical or virtual network devices. Examples of network-layer components include network address translator (NAT) software, routing software, Virtual Private Network (VPN) client or server software, port-forwarding software, software firewalls, network interface controllers (NICs), drivers, and filter drivers.

Alternatively or additionally to forwarding an access request to the TMS, the client or server may forward the response to the request, which is generated by the relevant request-handling application, to the TMS, before the response is sent to the request-generating application. Further to receiving a forwarded response, the TMS may modify the response, require additional authentication from the user, and/or implement any other security measures. Finally, the TMS returns the response to the client or server, and the response is then passed to the request-generating application.

For example, the network layer of a server, such as a DC, may be configured to forward certain received access requests to the TMS, instead of directly passing these requests to the application, such as the Active Directory Domain Services (ADDS) application, that handles such access requests. Subsequently to receiving such a forwarded request, the TMS may ascertain relevant parameters of the request, and then ascertain, based on these parameters, whether to allow the request, block the request, or require additional authentication before making this decision. Subsequently, the TMS may return the request to the network layer of the server. The network layer may then pass the request to the request-handling application, typically such that the application is unaware that the request was received from the TMS.

Subsequently, the application generates a response to the request, and passes this request to the network layer. The network layer may then forward the response to the TMS, instead of sending the response directly to the client from which the request originated. If the response indicates that the requested access was granted, and if the TMS previously ascertained that additional authentication is required, the TMS may ask the user to provide additional authentication. If the TMS does not receive the required authentication, the TMS may modify the response to indicate a denial of the request. Subsequently, the TMS may return the response to the network layer of the server, for forwarding on to the client.

As another example, the network layer of a client may be configured to forward, to the TMS, certain access requests originating from an application on the client. Further to receiving such an access request, the TMS may inspect and/or modify the request, before returning the request to the network layer of the client for forwarding to the intended destination. Similarly, upon receiving a response from the destination, the network layer of the client may forward the response to the TMS, and the TMS may inspect and/or modify the response before returning the response to the network layer, for passing on to the application.

In some embodiments, forwarding to the TMS is implemented by installing, on the relevant device, a driver that handles incoming communication to the device in accordance with rules that specify which communication is to be forwarded to the TMS, which is to be sent to the relevant application, and which to another device. In other embodiments, a NAT performs this function. Alternatively or additionally, port forwarding, or routing, may be used to implement the forwarding techniques described herein.

Advantageously, in the event that the TMS is unresponsive, inoperative, or dysfunctional, the network layer of the relevant device may simply cease forwarding to the TMS, or forward to a different server, such that the application on the device may continue sending or processing access requests. In contrast, were the TMS to reside (physically or logically) between the origin and destination of the access request, a failure in the TMS might render the application unable to continue sending or processing access requests.

### SYSTEM DESCRIPTION

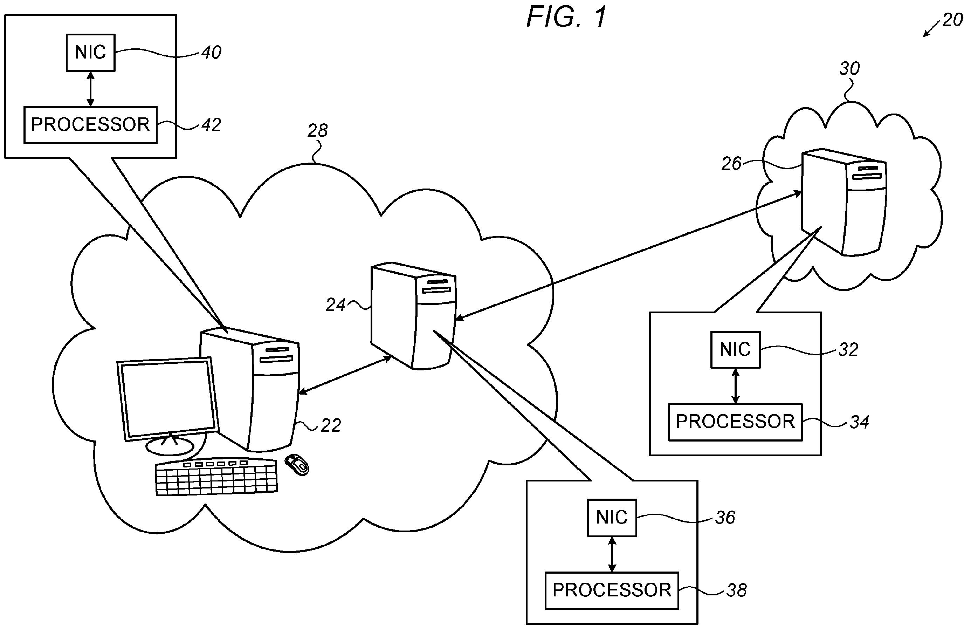

Reference is initially made to Fig. 1, which is a schematic illustration of a system 20 for managing access requests and the responses to such requests, in accordance with some embodiments of the present invention.

In the example scenario depicted in Fig. 1, a client 22 and a server 24, such as a DC, belong to a local area network (LAN) 28, such as a LAN belonging to a workplace. Client 22 requests, from server 24, access to various resources. For example, client 22 may request to access a Kerberos Key Distribution Center (KDC), such as to receive a Kerberos ticket. Client 22 comprises a network interface, such as a NIC 40, and a processor 42. Processor 42 exchanges communication with server 24, and with other devices, via NIC 40. Likewise, server 24 comprises a network interface, such as a NIC 36, and a processor 38. Processor 38 exchanges communication with client 22, and with other devices, via NIC 36.

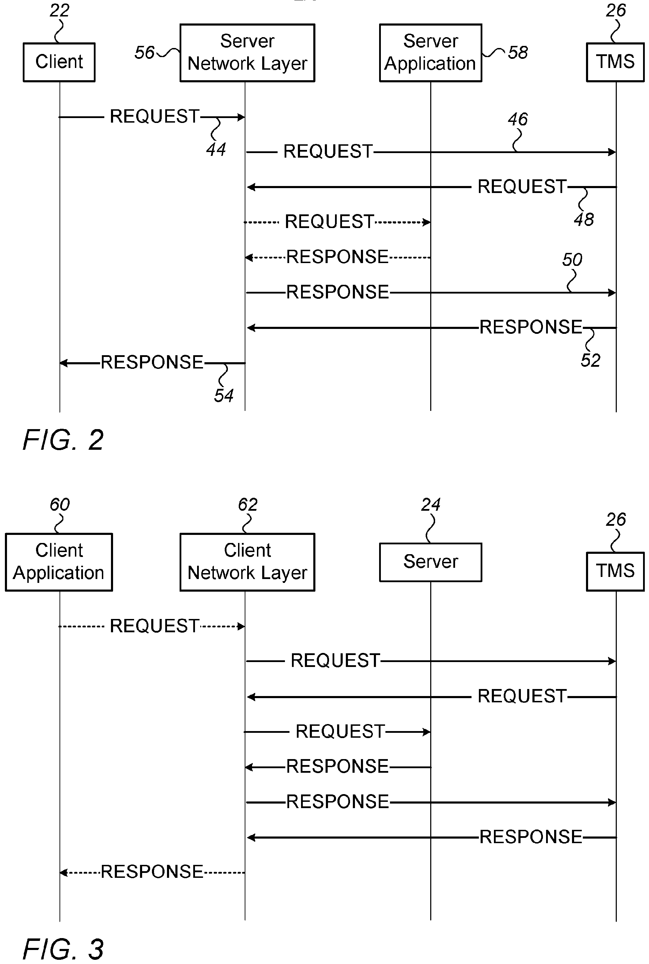

As further shown in Fig. 1, server 24 is configured to communicate with a traffic-management server (TMS) 26. More particularly, as described in detail below with reference to Fig. 2, server 24 may forward, to TMS 26, access requests received from client 22, instead of immediately processing these requests. (Typically, server 24 does not retain a copy of any forwarded requests.) Subsequently to receiving a forwarded request, TMS 26 may inspect the request, modify the request, and/or perform various other functions, and then return the request to server 24 for processing. Alternatively or additionally, server 24 may forward, to TMS 26, responses to the aforementioned access requests, instead of immediately communicating these responses to client 22. (Typically, server 24 does not retain a copy of any forwarded responses.) Subsequently to receiving a forwarded response, TMS 26 may inspect the response, modify the response, and/or perform various other functions, and then return the response to server 24 for forwarding to the client.

TMS 26 comprises a processor 34, configured to perform the various traffic-management functions described herein, along with a network interface, such as a NIC 32, via which TMS 26 exchanges communication with other devices. In some embodiments, as shown in Fig. 1, TMS 26 does not belong to LAN 28, and server 24 communicates with TMS 26 over an external network 30, such as the Internet. (In such embodiments, the server may communicate with the TMS over a VPN tunnel.) In other embodiments, TMS 26 resides within LAN 28.

In some embodiments, as further described below with reference to Fig. 3, access requests originating from client 22, and/or the responses to such requests, may be forwarded to TMS 26 by client 22, instead of by server 24. For example, client 22 may forward, to TMS 26, an access request that is directed to server 24 or to another server residing outside of LAN 28, instead of immediately communicating this request to the destination server. (Typically, client 22 does not retain a copy of the forwarded request.) Alternatively or additionally, client 22 may forward, to TMS 26, a response that was received from server 24 or from another server (typically without retaining a copy of the response), instead of immediately processing the response. After receiving, and processing, a request or response from client 22, TMS 26 may return the request or response to client 22. (It is noted that, in the context of the present application, including the claims, a message is said to be "directed to" a particular device or application if the particular device or application is the intended recipient of the message.)

It is noted that LAN 28 may include any number of clients and servers, each of which may be configured to communicate with TMS 26 as described herein. It is further noted that system 20 may comprise a plurality of traffic-management servers 26, each of which may service any number of LANs and/or other types of local networks, by receiving and processing communication that is forwarded from these networks. In some embodiments, even devices that do not belong to a local network may forward access requests, and/or the responses to such requests, to TMS 26. Access requests forwarded to TMS 26 may include, for example, a request to access a KDC, a service, such as a directory service (e.g., a Lightweight Directory Access Protocol (LDAP) directory service), an NT LAN Manager (NTLM) or Netlogon authentication handler, a webserver, a domain, a ticket or encryption key, an application, an application server, a data storage device, a computer, any other communication device. It is noted that, in general, any authentication request, in which the client requests to authenticate itself, is considered herein to be a request to access a resource, and may therefore be forwarded to the TMS.

In general, the techniques described herein may be applied to any scenario in which a first device, which may be referred to as a "request-origin device," requests, from a second device, which may be referred to as a "request-destination device," to access a resource. For ease of description, however, the present description generally refers to the particular example illustrated in Fig. 1, in which client 22 is the request-origin device, and server 24 is the request-destination device.

In general, each of the processors described herein may be embodied as a single processor, or as a cooperatively networked or clustered set of processors. Each of the processors described herein is typically a programmed digital computing device comprising a central processing unit (CPU), random access memory (RAM), non-volatile secondary storage, such as a hard drive or CD ROM drive, network interfaces, and/or peripheral devices. Program code, including software programs, and/or data are loaded into the RAM for execution and processing by the CPU and results are generated for display, output, transmittal, or storage, as is known in the art. The program code and/or data may be downloaded to the computer in electronic form, over a network, for example, or it may, alternatively or additionally, be provided and/or stored on non-transitory tangible media, such as magnetic, optical, or electronic memory. Such program code and/or data, when provided to the processor, produce a machine or special-purpose computer, configured to perform the tasks described herein.

### FORWARDING FROM THE SERVER TO THE TMS

Reference is now made to Fig. 2, which is a schematic illustration of a flow of communication between client 22, server 24, and TMS 26, in accordance with some embodiments of the present invention.

By way of introduction, it is noted that Fig. 2 depicts two separate layers of functionality of server 24 participating in the illustrated flow of communication. The first of these layers, a network layer 56, handles communication to and from server 24. Components of server 24 at the network layer may include one or more hardware elements, such as NIC 36, along with any relevant software installed on server 24, which, when executed by processor 38, performs the forwarding functionality described herein. In some embodiments, network layer 56 is implemented at least partly on a virtual machine.

The second of these layers, an application 58 that runs in the user space or kernel of the server, processes access requests from client 22. Application 58 may include, for example, an Active Directory Domain Services application, an LDAP application, an NTLM or Netlogon authentication handler, or a webserver. In some embodiments, application 58 runs on a virtual machine. Advantageously, as further described below, communication between the server and TMS 26 may be performed even without any special configuration of application 58.

The flow of Fig. 2 begins with a first message 44, originating from the client, that includes a request to access a resource. This request, which is directed to application 58, is received at network layer 56. Subsequently, processor 38, by executing the relevant network-layer software (as described immediately below), decides to forward the request to TMS 26 before communicating the request to application 58. In response to this decision, processor 38, without communicating the request to application 58 (and, typically, without retaining a copy of the request), forwards the request, in a second message 46, from network layer 56, over LAN 28 and/or external network 30, to TMS 26. (It is noted that, for ease of description, the decision to forward the request, and the consequent forwarding, may alternatively be described as being performed by the network layer itself, or by the relevant components that belong to the network layer.) TMS 26 receives, and then processes, the forwarded request, as further described below.

The decision to forward the request from network layer 56, and the consequent forwarding of the request, may be implemented using any suitable technique. At least some of these techniques may take advantage of the fact that certain ports are designated for access requests of certain types; hence, any communication received at one of these ports may be assumed to be an access request, and may accordingly be forwarded (via NIC 36) to the TMS.

As an example of one such technique, a NAT installed on the server may be configured to forward any communication received at a particular port to the TMS. For example, the NAT may pass the received communication to a VPN interface, which may then forward the communication, through a VPN tunnel, to the TMS. Alternatively, the NAT may pass the received communication to port-forwarding software, which may then forward the communication to the TMS. Per another technique, port-forwarding software, or routing software, may forward, to the TMS, any communication received at a particular port, even without the involvement of a NAT. As yet another alternative, a driver installed on the server may be configured to identify any access requests in incoming communication, by inspecting the content of the incoming communication, and/or by ascertaining the port at which the communication was received. The driver may be further configured to forward any identified access requests to TMS 26.

(It is noted that, in the context of the present application, including the claims, a processor (or network-layer software) may be said to "decide" to forward a particular message if the processor (or the network-layer software) initiates the forwarding, regardless of the method by which the forwarding is initiated. Thus, for example, even if the processor initiates the forwarding of a message by implementing a simple, preconfigured forwarding rule, such as a network address translation, the processor may be said to have "decided" to forward the message.)

Subsequently to receiving the forwarded request, TMS processes the forwarded request. For example, TMS 26 may log relevant parameters of the request, for monitoring purposes. Alternatively or additionally, the TMS may inspect relevant parameters of the request, such as the identity of the user who initiated the request, the requested resource, relevant networks addresses included in the request, and the time of the request. Optionally, the TMS may further calculate a risk measure associated with the request, based on these parameters. If the parameters of the request indicate that the request should be denied - e.g., if the calculated risk measure exceeds a predetermined threshold - the TMS may close the connection between the TMS and the server, or simply refrain from returning the request to the server (i.e., drop the request), such that the server subsequently closes the connection between the server and the client. Alternatively, the TMS may decide that the request should be denied, but may refrain from implementing this denial until after inspecting the server's response to the request, as further described below.

In some embodiments, in processing the request, the TMS requests authentication from the user of the client. (It is noted that the user may use the client indirectly, via another device that controls the client.) For example, the TMS may decide, based on the parameters of the request (and, optionally, based on a risk measure calculated from these parameters and/or any of the other factors described above), that authentication from the user is required, and may then request the required authentication responsively thereto. Alternatively, the TMS may request authentication, regardless of the content of the request. To request that the user authenticate himself to the TMS, the TMS may communicate an appropriate message to the client, or to another device, such as the user's smartphone, requesting that the user submit a password, biometric factor (such as a fingerprint), or any other appropriate authentication factor. Subsequently, the TMS waits to receive the requested authentication factor. If the authentication factor is not received within a particular time interval, the TMS may close the connection, or simply refrain from returning the request to the server, as described above. In other embodiments, the TMS may decide, based on the content of the request, that further authentication from the user is required, but may refrain from requesting this authentication until after inspecting the server's response to the request, as further described below.

Alternatively or additionally to performing the functions described above, the TMS may, in processing the request, modify the request, prior to returning the request to the server. For example, the TMS may modify the request to request a lower level of access than was originally requested, or to request a different resource from that which was originally requested. Alternatively, in the event that the request cannot be handled by application 58, due, for example, to the client using outdated software, the TMS may modify the request (e.g., by adding or removing particular fields), such that the request is compatible with application 58. (Especially in view of the above, it is noted that the techniques described herein may be applied even outside the context of computer-network security.)

Following the processing of the request, the TMS returns the request to the server, by passing, to the server, a third message 48 that includes the request. The request (which, as described immediately above, may have been modified by TMS 26) is received at network layer 56, and is then communicated to application 58. Application 58 then generates a response to the request, this response being directed to the client (and in particular, to the application on the client that generated the request). Subsequently, application 58 communicates this response to network layer 56. (The dashed arrows between network layer 56 and application 58 indicate communication that is passed internally, within server 24.)

In some embodiments, the TMS returns the request under an identifier of the client, such that the returned request appears, to the server, to have been received from the client. For example, the TMS may insert the Internet Protocol (IP) address of the client in the "source IP" field of third message 48. Alternatively or additionally, network layer 56 may format the request to appear to application 58 as if the request were received directly from the client. Advantageously, this may help obviate the need to make any changes to application 58 to facilitate the flow of communication depicted in Fig. 2.

Subsequently to receiving the response from the application, without communicating the response to the client (and, typically, without retaining a copy of the response), the network layer forwards the response, in a fourth message 50, to the TMS, using any of the forwarding techniques described above. Typically, third message 48 is passed over a separate connection, such that the response from application 58 is likewise associated with this separate connection. Hence, processor 38, by executing the relevant network-layer software, may ascertain that the response is to be forwarded to the TMS, rather than passed directly to the client.

The TMS receives the response, by receiving fourth message 50. Subsequently, the TMS processes the received response, by logging the response for monitoring purposes, inspecting the content of the response, and/or performing other actions in response to the content of the response. For example, the TMS may ascertain that the response indicates that the request was granted and, in response thereto, and in response to previously having decided, based on the content of the request, to deny the request, modify the response to indicate that the request was denied. (Alternatively, the TMS may close the connection, or simply refrain from returning the response to the server.) Alternatively, in response to ascertaining that the response indicates that the request was granted, and in response to having previously decided (e.g., based on the content of the request) to request additional authentication from the user, the TMS may request the authentication, as described above. (As yet another alternative, the TMS may request authentication from the user whenever the response indicates that the request was granted.) In response to not receiving the requested authentication, the TMS may modify the response to indicate that the request was denied, or to indicate that the client should send another access request.

Subsequently (assuming the TMS does not terminate the connection or decide to refrain from returning the response), the TMS returns the response to the server, in a fifth message 52. The response is received at the network layer of the server. (As noted immediately above, the server may receive the response after the response has been modified by the TMS.) Subsequently, the server forwards the response, in a sixth message 54, to the client (and in particular, to the application on the client that generated the request).

In some embodiments, the TMS, when processing a request and/or a response, considers the history of prior access requests by the current user and/or by other users. For example, the TMS may consider such data when deciding whether to require additional authentication from the user (e.g., when calculating a risk measure that is used for this decision). When incorporating this data into the decision-making process, the TMS may use either fixed logic or a machine-learned model. Alternatively or additionally, the TMS may receive indications from other security systems about suspicious or high-risk entities (e.g., users, clients, servers, or IP addresses), and consider this additional data when processing a request or a response. For example, the TMS may increase a risk measure that is calculated for a given request, in response to one or more parameters in the request matching an indication received from another security system.

### FORWARDING FROM THE CLIENT TO THE TMS

Reference is now made to Fig. 3, which is a schematic illustration of an alternate flow of communication between client 22, server 24, and TMS 26, in accordance with some embodiments of the present invention.

By way of introduction, it is noted that Fig. 3 depicts two separate layers of functionality of client 22 participating in the illustrated flow of communication. The first of these layers, a network layer 62, handles communication to and from the client. Components of client 22 at the network layer may include one or more hardware elements, such as NIC 40, along with any relevant software installed on client 22, which, when executed by processor 42, performs the forwarding functionality described herein. In some embodiments, network layer 62 is implemented at least partly on a virtual machine.

The second of these layers, an application 60 that runs in the user space or kernel of the client, generates access requests, and receives and processes the responses to such requests. Examples of application 60 include a web browser, or any authentication package. In some embodiments, application 60 runs on a virtual machine. Advantageously, communication with TMS 26 may be performed even without any special configuration of application 60.

The flow in Fig. 3 is generally similar to the flow in Fig. 2, except for client 22, instead of server 24, performing the forwarding to TMS 26. Hence, only a brief description of this flow is provided below.

First, application 60 generates an access request, which is directed to the server (and in particular, to application 58 running on the server). This request is communicated, internally, to network layer 62. Subsequently, processor 42, by executing the relevant network-layer software, decides to forward the request to TMS 26 before communicating the request to server 24. In response to this decision, processor 42, without communicating the request to the server (and, typically, without retaining a copy of the request), forwards the request, from network layer 62, to the TMS. In forwarding the request, network layer 62 may use any suitable forwarding techniques, such as any of the techniques described above. (Processor 42, by executing the relevant network-layer software, may identify that the request is to be forwarded to the TMS based on the content of the request, and/or based on any ports that are specified in the request.)

Subsequently, the TMS processes the request (as described above with reference to Fig. 2), and then returns the request to the client. The client then passes this request to the server. Subsequently, the server generates a response to the request, this response being directed to application 60, and communicates this response to the client. The response is received at network layer 62. Without communicating this response to application 60 (and, typically, without retaining a copy of the response), network layer 62 forwards the response to the TMS. The TMS then processes the response, and returns the response to network layer 62. Finally, network layer 62 communicates the response to application 60.

In some embodiments, the TMS returns the response under an identifier of the server, such that the returned request appears, to the client, to have been received from the server. For example, the TMS may insert the Internet Protocol (IP) address of the server in the "source IP" field of the message that contains the response. Alternatively or additionally, network layer 62 may format the response to appear to application 60 as if the response were received directly from the server. Advantageously, this may help obviate the need to make any changes to application 60 to facilitate the flow of communication depicted in Fig. 3.

### OTHER EMBODIMENTS

In some embodiments, the server or client forwards only the request to the TMS, and the response is not forwarded to the TMS at all. (In other words, after the TMS processes the request and returns the request to the forwarding device, the response to the request may be sent directly from the server to the client.) Alternatively, the server or client may forward only the response to the TMS, and the request may not be forwarded to the TMS at all. (In other words, the request may be sent directly from the client to the server, after which the response may be forwarded to the TMS, processed by the TMS, and then returned to the forwarding device.) As yet another alternative, the client may forward the request and the server may forward the response, or *vice versa.* In some embodiments, a response is forwarded to the TMS only if the response indicates that the request was approved, and/or only if the response satisfies other predefined criteria.

As noted above in the Overview, in some embodiments, the forwarding techniques described herein are implemented solely in network-layer hardware, such that the processor of the server or client need not execute any network-layer software.

### IMPLEMENTING A MULTI-FACTOR AUTHENTICATION POLICY

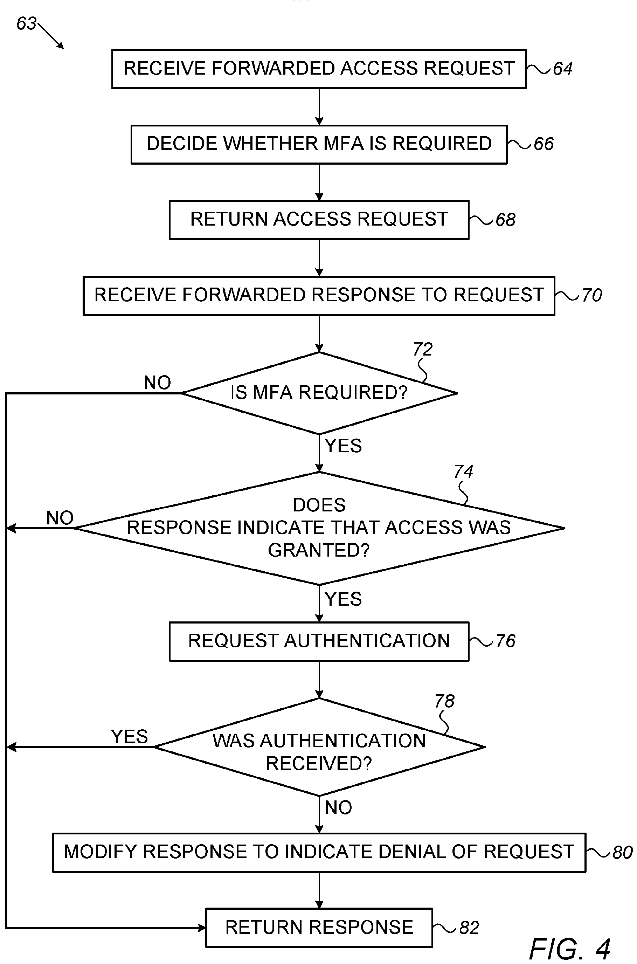

Reference is now made to Fig. 4, which is a schematic illustration of a flow diagram for a method 63 for implementing a multi-factor authentication (MFA) policy, in accordance with some embodiments of the present invention. (In general, the various steps in method 63 were already described above, with reference to the previous figures. As noted above with reference to the previous figures, many variations to method 63 are included within the scope of the present disclosure.)

First, at a request-receiving step 64, the TMS receives, from client 22 or server 24, a forwarded access request. Subsequently, at a deciding step 66, the TMS decides, based on the parameters of the request, whether multi-factor authentication (MFA) is required, i.e., whether the user is required to submit any authentication factors in addition to whichever authentication factors (if any) are already required by the server. Next, at a request-returning step 68, the TMS returns the request to the client or server. Subsequently, at a response-receiving step 70, the TMS receives, from the client or server, a forwarded response to the access request. The TMS then ascertains, at a first ascertaining step 72, whether the TMS previously decided (at deciding step 66) to require MFA. If yes, the TMS then ascertains, at a response-inspecting step 74, whether the response indicates that the requested access was granted. If not, or if MFA is not required, the TMS returns the response to the server or client, at a response-returning step 82. Otherwise, the TMS requests authentication from the user, at an authentication-requesting step 76.

Subsequently to requesting authentication, the TMS, at a second ascertaining step 78, ascertains whether the requested authentication was received (e.g., within a predetermined time interval). If yes, the TMS returns the response to the client or server, at response-returning step 82. Otherwise, the TMS, before returning the response, first modifies the response, at a response-modifying step 80, to indicate that the request was denied. (Alternatively, as noted above, the TMS may simply drop the response or close the connection, to indicate that the request was denied.)

### HEALTH TESTS

Typically, health tests are continually (e.g., periodically) performed, to verify that the TMS is handling traffic as required.

In the event that the server is configured to forward to the TMS, the server may initiate each health test, by passing a health-test request to the TMS. Subsequently to receiving such a request, and assuming the TMS is operating as required, the TMS communicates a test access-request message, which simulates a request to access a resource, to the server. This message is received at the network layer of the server, and is then forwarded, from the network layer, to the TMS, as if this message were a genuine request to access the resource. The flow of communication then proceeds as in Fig. 2, with the TMS playing the role of the client, in addition to the usual role of the TMS. appending claims.)

First, at a request-receiving step 64, the TMS receives, from client 22 or server 24, a forwarded access request. Subsequently, at a deciding step 66, the TMS decides, based on the parameters of the request, whether multi-factor authentication (MFA) is required, i.e., whether the user is required to submit any authentication factors in addition to whichever authentication factors (if any) are already required by the server. Next, at a request-returning step 68, the TMS returns the request to the client or server. Subsequently, at a response-receiving step 70, the TMS receives, from the client or server, a forwarded response to the access request. The TMS then ascertains, at a first ascertaining step 72, whether the TMS previously decided (at deciding step 66) to require MFA. If yes, the TMS then ascertains, at a response-inspecting step 74, whether the response indicates that the requested access was granted. If not, or if MFA is not required, the TMS returns the response to the server or client, at a response-returning step 82. Otherwise, the TMS requests authentication from the user, at an authentication-requesting step 76.

Subsequently to requesting authentication, the TMS, at a second ascertaining step 78, ascertains whether the requested authentication was received (e.g., within a predetermined time interval). If yes, the TMS returns the response to the client or server, at response-returning step 82. Otherwise, the TMS, before returning the response, first modifies the response, at a response-modifying step 80, to indicate that the request was denied. (Alternatively, as noted above, the TMS may simply drop the response or close the connection, to indicate that the request was denied.)

### HEALTH TESTS

Typically, health tests are continually (e.g., periodically) performed, to verify that the TMS is handling traffic as required.

In the event that the server is configured to forward to the TMS, the server may initiate each health test, by passing a health-test request to the TMS. Subsequently to receiving such a request, and assuming the TMS is operating as required, the TMS communicates a test access-request message, which simulates a request to access a resource, to the server. This message is received at the network layer of the server, and is then forwarded, from the network layer, to the TMS, as if this message were a genuine request to access the resource. The flow of communication then proceeds as in Fig. 2, with the TMS playing the role of the client, in addition to the usual role of the TMS.

In response to an unsuccessful health test - e.g., in response to the TMS not responding to communication within a predetermined time interval, or sending communication that is not readable - system 20 may adopt a failover configuration, in that the server or client may forward to a different traffic-management server. Alternatively, system 20 may adopt a fail open configuration, in that the server or client may simply cease forwarding access requests, and the responses to such requests, to any traffic-management server.

It will be appreciated by persons skilled in the art that the present invention includes both combinations and subcombinations of the various features described hereinabove, as well as variations and modifications thereof that are not in the prior art, which would occur to persons skilled in the art upon reading the foregoing description, within the scope of the appending claims.

## Claims

1. A server (24), comprising:
a network interface (36); and
a processor (38), configured to run a directory application (58);
**characterized in that** the processor is configured to, while running the directory application (58):
receive, via the network interface (36), an authentication request (44) originating from a request-origin device (22) and directed to the directory application (58),
in response to receiving the authentication request, by executing network-layer software without using the directory application (58), forward the authentication request (44) to a traffic-management server (26) over a connection, thereby causing the traffic-management server (26) to request provision of authentication by a user who initiated the authentication request,
subsequently to forwarding the authentication request (44), receive the authentication request (44) from the traffic-management server (26),
in response to receiving the authentication request (44) from the traffic-management server (26), by executing the network-layer software, pass the authentication request (44) to the directory application (58),
subsequently to passing the authentication request (44) to the directory application (58), receive a response (50) to the authentication request from the directory application (58),
in response to receiving the response from the directory application, by executing the network-layer software without using the directory application (58), communicate the response to the traffic-management server,
subsequently to communicating the response to the traffic-management server (26), receive the response (50), over the connection, from the traffic-management server (26), and
in response to receiving the response (50) from the traffic-management server (26), by executing the network-layer software, forward the response (50) to the request-origin device (22).

2. The server according to claim 1, wherein the forwarding of the authentication request causes the traffic-management server to request the provision of authentication upon the traffic-management server receiving the response.

3. The server according to claim 1, wherein the processor is configured to receive the authentication request at a particular port, wherein the network-layer software includes a network address translator configured to forward any communication received at the particular port to the traffic-management server, and wherein the processor is configured to forward the authentication request using the network address translator.

4. The server according to claim 1, wherein the connection is a first connection, wherein the authentication request is received from the traffic-management server over a second connection such that the response is generated by the directory application in association with the second connection, and wherein the processor is configured to communicate the response to the traffic-management server responsively to the response being associated with the second connection.

5. The server according to any preceding claim, wherein the processor is configured to forward the authentication request through a Virtual Private Network tunnel.

6. The server according to any preceding claim, wherein the directory application is selected from the group of directory applications consisting of: an Active Directory Domain Services application, a Kerberos Key Distribution Center, and a Lightweight Directory Access Protocol directory application.

7. A method, comprising:
running a directory application (58) on a server (24); and
**characterized by**, while running the directory application (58):
receiving an authentication request (44) originating from a request-origin device (22) and directed to the directory application (58);
in response to receiving the authentication request (44), by executing network-layer software without using the directory application (58), forwarding the authentication request (44) to a traffic-management server (26) over a connection, thereby causing the traffic-management server (26) to request provision of authentication by a user who initiated the authentication request (44);
subsequently to forwarding the authentication request (44), receiving the authentication request (44) from the traffic-management server (26);
in response to receiving the authentication request (44) from the traffic-management server (26), by executing the network-layer software, passing the authentication request (44) to the directory application (58);
subsequently to passing the authentication request (44) to the directory application (58), receiving a response (50) to the authentication request (44) from the directory application (58);
in response to receiving the response (50) from the directory application (58), by executing the network-layer software without using the directory application, communicating the response to the traffic-management server;
subsequently to communicating the response to the traffic-management server, receiving the response, over the connection, from the traffic-management server; and
subsequently to receiving the response from the traffic-management server (26), by executing the network-layer software, forwarding the response to the request-origin device.

8. The method according to claim 7, wherein the forwarding of the authentication request causes the traffic-management server to request the provision of authentication upon the traffic-management server receiving the response.

9. The method according to claim 7, wherein receiving the authentication request comprises receiving the authentication request at a particular port, wherein the network-layer software includes a network address translator configured to forward any communication received at the particular port to the traffic-management server, and wherein forwarding the authentication request comprises forwarding the authentication request using a network address translator.

10. The method according to claim 7, wherein the connection is a first connection, wherein the authentication request is received from the traffic-management server over a second connection such that the response is generated by the directory application in association with the second connection, and wherein communicating the response to the traffic-management server comprises communicating the response to the traffic-management server responsively to the response being associated with the second connection.

11. The method according to any one of claims 7 to 10, wherein forwarding the authentication request comprises forwarding the authentication request through a Virtual Private Network tunnel.

12. The method according to any one of claims 7 to 11, wherein the directory application is selected from the group of directory applications consisting of: an Active Directory Domain Services application, a Kerberos Key Distribution Center, and a Lightweight Directory Access Protocol directory application.

13. A computer software product comprising a tangible non-transitory computer-readable medium in which program instructions are stored, which instructions, when read by a processor (38), cause the processor (38) to:
receive, at a network layer of a server, an authentication request (44) originating from a request-origin device (22) and directed to a directory application (58) run by the processor (38); and
**characterized in that** the instructions, when read by the processor (38), causes the processor (38) to:
in response to receiving the authentication request (44), without using the directory application (58), forward the authentication request (44) from the network layer to a traffic-management server (26) over a connection, thereby causing the traffic-management server (26) to request provision of authentication by a user who initiated the authentication request (44),
subsequently to forwarding the authentication request (44), receive the authentication request (44), at the network layer, from the traffic-management server (26),
in response to receiving the authentication request (44) from the traffic-management server (26), pass the authentication request (44) from the network layer to the directory application (58),
subsequently to passing the authentication request (44) to the directory application (26), receive a response (50) to the authentication request (44), at the network layer, from the directory application (58),
subsequently to receiving the response (50) from the directory application (58), without using the directory application (58), communicate the response (50) from the network layer to the traffic-management server (26),
subsequently to communicating the response (50) to the traffic-management server (26), receive the response (50) at the network layer, over the connection, from the traffic-management server (26), and
in response to receiving the response (50) from the traffic-management server (26), forward the response (50) from the network layer to the request-origin device.

14. The computer software product according to claim 13, wherein the forwarding of the authentication request causes the traffic-management server to request the provision of authentication upon the traffic-management server receiving the response.

15. The computer software product according to claim 13 or 14, wherein the directory application is selected from the group of directory applications consisting of: an Active Directory Domain Services application, a Kerberos Key Distribution Center, and a Lightweight Directory Access Protocol directory application.

## Patentansprüche

1. Server (24), der Folgendes umfasst:
eine Netzwerkschnittstelle (36); und
einen Prozessor (38), der konfiguriert ist, um eine Verzeichnisanwendung (58) auszuführen;
**dadurch gekennzeichnet, dass** der Prozessor, während des Ausführens der Verzeichnisanwendung (58), für Folgendes konfiguriert ist:
Empfangen, über die Netzwerkschnittstelle (36), einer Authentifizierungsanforderung (44), die von einer Anforderungsquellvorrichtung (22) stammt und an die Verzeichnisanwendung (58) gerichtet ist,
als Reaktion auf das Empfangen der Authentifizierungsanforderung, durch Ausführen von Netzwerkschicht-Software ohne Verwenden der Verzeichnisanwendung (58), Weiterleiten der Authentifizierungsanforderung (44) an einen Verkehrsmanagementserver (26) über eine Verbindung, wobei dadurch verursacht wird, dass der Verkehrsmanagementserver (26) eine Bereitstellung einer Authentifizierung durch einen Benutzer anfordert, der die Authentifizierungsanforderung initiiert hat,
anschließend an das Weiterleiten der Authentifizierungsanforderung (44), Empfangen der Authentifizierungsanforderung (44) von dem Verkehrsmanagementserver (26),
als Reaktion auf das Empfangen der Authentifizierungsanforderung (44) von dem Verkehrsmanagementserver (26), durch Ausführen der Netzwerkschicht-Software, Übermitteln der Authentifizierungsanforderung (44) an die Verzeichnisanwendung (58),
anschließend an das Übermitteln der Authentifizierungsanforderung (44) an die Verzeichnisanwendung (58), Empfangen einer Antwort (50) auf die Authentifizierungsanforderung von der Verzeichnisanwendung (58),
als Reaktion auf das Empfangen der Antwort von der Verzeichnisanwendung, durch Ausführen der Netzwerkschicht-Software ohne Verwenden der Verzeichnisanwendung (58), Kommunizieren der Antwort an den Verkeh rsmanagementserver,
anschließend an das Kommunizieren der Antwort an den Verkehrsmanagementserver (26), Empfangen der Antwort (50) über die Verbindung von dem Verkehrsmanagementserver (26) und
als Reaktion auf das Empfangen der Antwort (50) von dem Verkehrsmanagementserver (26), durch Ausführen der Netzwerkschicht-Software, Weiterleiten der Antwort (50) an die Anforderungsquellvorrichtung (22).

2. Server nach Anspruch 1, wobei das Weiterleiten der Authentifizierungsanforderung bewirkt, dass der Verkehrsmanagementserver die Bereitstellung der Authentifizierung bei Empfangen der Antwort durch den Verkehrsmanagementserver anfordert.

3. Server nach Anspruch 1, wobei der Prozessor konfiguriert ist, um die Authentifizierungsanforderung an einem bestimmten Port zu empfangen, wobei die Netzwerkschicht-Software einen Netzwerkadressumsetzer beinhaltet, der konfiguriert ist, um eine beliebige Kommunikation, die an dem bestimmten Port empfangen wird, an den Verkehrsmanagementserver weiterzuleiten, und wobei der Prozessor konfiguriert ist, um die Authentifizierungsanforderung unter Verwendung des Netzwerkadressumsetzers weiterzuleiten.

4. Server nach Anspruch 1, wobei die Verbindung eine erste Verbindung ist, wobei die Authentifizierungsanforderung von dem Verkehrsmanagementserver über eine zweite Verbindung derart empfangen wird, dass die Antwort durch die Verzeichnisanwendung in Zusammenarbeit mit der zweiten Verbindung erzeugt wird, und wobei der Prozessor konfiguriert ist, um die Antwort an den Verkehrsmanagementserver als Reaktion auf die Antwort, die der zweiten Verbindung zugeordnet ist, zu kommunizieren.

5. Server nach einem der vorhergehenden Ansprüche, wobei der Prozessor konfiguriert ist, um die Authentifizierungsanforderung durch einen Tunnel eines Virtual Private Network weiterzu leiten.

6. Server nach einem der vorhergehenden Ansprüche, wobei die Verzeichnisanwendung aus der Gruppe von Verzeichnisanwendungen ausgewählt ist, die aus Folgenden besteht:
einer Anwendung für Active-Directory-Domänendienste, einem Kerberos-Schlüsselverteilungscenter und einer Verzeichnisanwendung für ein Lightweight Directory Access Protocol.

7. Verfahren, das Folgendes umfasst:
Ausführen einer Verzeichnisanwendung (58) auf einem Server (24); und
**gekennzeichnet durch** Folgendes, während die Verzeichnisanwendung (58) ausgeführt wird:
Empfangen einer Authentifizierungsanforderung (44), die von einer Anforderungsquellvorrichtung (22) stammt und an die Verzeichnisanwendung (58) gerichtet ist;
als Reaktion auf das Empfangen der Authentifizierungsanforderung (44), durch Ausführen von Netzwerkschicht-Software ohne Verwenden der Verzeichnisanwendung (58), Weiterleiten der Authentifizierungsanforderung (44) an einen Verkehrsmanagementserver (26) über eine Verbindung, wobei dadurch verursacht wird, dass der Verkehrsmanagementserver (26) die Bereitstellung der Authentifizierung durch einen Benutzer anfordert, der die Authentifizierungsanforderung (44) initiiert hat;
anschließend an das Weiterleiten der Authentifizierungsanforderung (44), Empfangen der Authentifizierungsanforderung (44) von dem Verkehrsmanagementserver (26);
als Reaktion auf das Empfangen der Authentifizierungsanforderung (44) von dem Verkehrsmanagementserver (26), durch Ausführen der Netzwerkschicht-Software, Übermitteln der Authentifizierungsanforderung (44) an die Verzeichnisanwendung (58);
anschließend an das Übermitteln der Authentifizierungsanforderung (44) an die Verzeichnisanwendung (58), Empfangen einer Antwort (50) auf die Authentifizierungsanforderung (44) von der Verzeichnisanwendung (58);
als Reaktion auf das Empfangen der Antwort (50) von der Verzeichnisanwendung (58), durch Ausführen der Netzwerkschicht-Software ohne Verwenden der Verzeichnisanwendung, Kommunizieren der Antwort an den Verkehrsmanagementserver;
anschließend an das Kommunizieren der Antwort an den Verkehrsmanagementserver, Empfangen der Antwort über die Verbindung von dem Verkehrsmanagementserver; und
anschließend an das Empfangen der Antwort von dem Verkehrsmanagementserver (26), durch Ausführen der Netzwerkschicht-Software, Weiterleiten der Antwort an die Anforderungsquellvorrichtung.

8. Verfahren nach Anspruch 7, wobei das Weiterleiten der Authentifizierungsanforderung bewirkt, dass der Verkehrsmanagementserver die Bereitstellung der Authentifizierung bei Empfangen der Antwort durch den Verkehrsmanagementserver anfordert.

9. Verfahren nach Anspruch 7, wobei das Empfangen der Authentifizierungsanforderung das Empfangen der Authentifizierungsanforderung an einem bestimmten Port umfasst, wobei die Netzwerkschicht-Software einen Netzwerkadressumsetzer beinhaltet, der konfiguriert ist, um eine beliebige Kommunikation, die an dem bestimmten Port empfangen wird, an den Verkehrsmanagementserver weiterzuleiten, und wobei das Weiterleiten der Authentifizierungsanforderung das Weiterleiten der Authentifizierungsanforderung unter Verwendung eines Netzwerkadressumsetzers umfasst.

10. Verfahren nach Anspruch 7, wobei die Verbindung eine erste Verbindung ist, wobei die Authentifizierungsanforderung von dem Verkehrsmanagementserver über eine zweite Verbindung derart empfangen wird, dass die Antwort durch die Verzeichnisanwendung in Zusammenarbeit mit der zweiten Verbindung erzeugt wird, und wobei das Kommunizieren der Antwort an den Verkehrsmanagementserver das Kommunizieren der Antwort an den Verkehrsmanagementserver als Reaktion auf die Antwort, die der zweiten Verbindung zugeordnet ist, umfasst.

11. Verfahren nach einem der Ansprüche 7 bis 10, wobei das Weiterleiten der Authentifizierungsanforderung das Weiterleiten der Authentifizierungsanforderung durch einen Tunnel eines Virtual Private Network umfasst.

12. Verfahren nach einem der Ansprüche 7 bis 11, wobei die Verzeichnisanwendung aus der Gruppe von Verzeichnisanwendungen ausgewählt ist, die aus Folgenden besteht: einer Anwendung für Active-Directory-Domänendienste, einem Kerberos-Schlüsselverteilungscenter und einer Verzeichnisanwendung für ein Lightweight Directory Access Protocol.

13. Computersoftwareprodukt, das ein greifbares, nicht flüchtiges computerlesbares Medium umfasst, in dem Programmanweisungen gespeichert sind, wobei die Anweisungen, wenn sie durch einen Prozessor (38) gelesen werden, den Prozessor (38) zu Folgendem veranlassen:
Empfangen, an einer Netzwerkschicht eines Servers, einer Authentifizierungsanforderung (44), die von einer Anforderungsquellvorrichtung (22) stammt und an eine Verzeichnisanwendung (58) gerichtet ist, die durch den Prozessor (38) ausgeführt wird; und
**dadurch gekennzeichnet, dass** die Anweisungen, wenn sie durch den Prozessor (38) gelesen werden, den Prozessor (38) zu Folgendem veranlassen:
als Reaktion auf das Empfangen der Authentifizierungsanforderung (44), ohne Verwenden der Verzeichnisanwendung (58), Weiterleiten der Authentifizierungsanforderung (44) von der Netzwerkschicht an einen Verkehrsmanagementserver (26) über eine Verbindung, wobei dadurch verursacht wird, dass der Verkehrsmanagementserver (26) die Bereitstellung der Authentifizierung durch einen Benutzer anfordert, der die Authentifizierungsanforderung (44) initiiert hat,
anschließend an das Weiterleiten der Authentifizierungsanforderung (44), Empfangen der Authentifizierungsanforderung (44) an der Netzwerkschicht von dem Verkehrsmanagementserver (26),
als Reaktion auf das Empfangen der Authentifizierungsanforderung (44) von dem Verkehrsmanagementserver (26), Übermitteln der Authentifizierungsanforderung (44) von der Netzwerkschicht an die Verzeichnisanwendung (58),
anschließend an das Übermitteln der Authentifizierungsanforderung (44) an die Verzeichnisanwendung (26), Empfangen einer Antwort (50) auf die Authentifizierungsanforderung (44) an der Netzwerkschicht von der Verzeichnisanwendung (58),
anschließend an das Empfangen der Antwort (50) von der Verzeichnisanwendung (58) ohne Verwenden der Verzeichnisanwendung (58), Kommunizieren der Antwort (50) von der Netzwerkschicht an den Verkehrsmanagementserver (26),
anschließend an das Kommunizieren der Antwort (50) an den Verkehrsmanagementserver (26), Empfangen der Antwort (50) an der Netzwerkschicht über die Verbindung von dem Verkehrsmanagementserver (26) und
als Reaktion auf das Empfangen der Antwort (50) von dem Verkehrsmanagementserver (26), Weiterleiten der Antwort (50) von der Netzwerkschicht an die Anforderungsquellvorrichtung.

14. Computersoftwareprodukt nach Anspruch 13, wobei das Weiterleiten der Authentifizierungsanforderung bewirkt, dass der Verkehrsmanagementserver die Bereitstellung der Authentifizierung bei Empfangen der Antwort durch den Verkehrsmanagementserver anfordert.

15. Computersoftwareprodukt nach Anspruch 13 oder 14, wobei die Verzeichnisanwendung aus der Gruppe von Verzeichnisanwendungen ausgewählt ist, die aus Folgenden besteht:
einer Anwendung für Active-Directory-Domänendienste, einem Kerberos-Schlüsselverteilungscenter und einer Verzeichnisanwendung für ein Lightweight Directory Access Protocol.

## Revendications

1. Serveur (24), comprenant :
une interface réseau (36) ; et
un processeur (38), configuré pour exécuter une application d'annuaire (58) ;
**caractérisé en ce que** le processeur est configuré pour, tout en exécutant l'application d'annuaire (58) :
recevoir, par l'intermédiaire de l'interface réseau (36), une demande d'authentification (44) provenant d'un dispositif d'origine de la demande (22) et dirigée vers l'application d'annuaire (58),
en réponse à la réception de la demande d'authentification, en exécutant un logiciel de couche réseau sans utiliser l'application d'annuaire (58), retransmettre la demande d'authentification (44) à un serveur de gestion de trafic (26) sur une connexion, amenant ainsi le serveur de gestion de trafic (26) à demander la fourniture d'une authentification par un utilisateur qui a lancé la demande d'authentification,
à la suite de la retransmission de la demande d'authentification (44), recevoir la demande d'authentification (44) du serveur de gestion de trafic (26),
en réponse à la réception de la demande d'authentification (44) en provenance du serveur de gestion de trafic (26), en exécutant le logiciel de couche réseau, transmettre la demande d'authentification (44) à l'application d'annuaire (58),
à la suite du passage de la demande d'authentification (44) à l'application d'annuaire (58), recevoir une réponse (50) à la demande d'authentification de l'application d'annuaire (58),
en réponse à la réception de la réponse de l'application d'annuaire, en exécutant le logiciel de couche réseau sans utiliser l'application d'annuaire (58), communiquer la réponse au serveur de gestion de trafic,
à la suite de la communication de la réponse au serveur de gestion de trafic (26), recevoir la réponse (50), sur la connexion, du serveur de gestion de trafic (26), et
en réponse à la réception de la réponse (50) du serveur de gestion du trafic (26), en exécutant le logiciel de couche réseau, retransmettre la réponse (50) au dispositif d'origine de la demande (22).

2. Serveur selon la revendication 1, dans lequel la retransmission de la demande d'authentification amène le serveur de gestion de trafic à demander la fourniture de l'authentification lorsque le serveur de gestion de trafic reçoit la réponse.

3. Serveur selon la revendication 1, dans lequel le processeur est configuré pour recevoir la demande d'authentification sur un port particulier, dans lequel le logiciel de couche réseau comporte un traducteur d'adresses réseau configuré pour retransmettre toute communication reçue sur le port particulier vers le serveur de gestion de trafic, et dans lequel le processeur est configuré pour retransmettre la demande d'authentification à l'aide du traducteur d'adresses réseau.

4. Serveur selon la revendication 1, dans lequel la connexion est une première connexion, la demande d'authentification étant reçue du serveur de gestion de trafic sur une seconde connexion de telle sorte que la réponse est générée par l'application d'annuaire en association avec la seconde connexion, et dans lequel le processeur est configuré pour communiquer la réponse au serveur de gestion de trafic en réponse au fait que la réponse est associée à la seconde connexion.

5. Serveur selon l'une quelconque des revendications précédentes, dans lequel le processeur est configuré pour retransmettre la demande d'authentification à travers un tunnel de réseau privé virtuel.

6. Serveur selon l'une quelconque des revendications précédentes, dans lequel l'application d'annuaire est choisie dans le groupe d'applications d'annuaire constitué : d'une application de services de domaine Active Directory, d'un centre de distribution de clés Kerberos et d'une application d'annuaire de protocole allégé d'accès d'annuaire.

7. Procédé comprenant :
l'exécution d'une application d'annuaire (58) sur un serveur (24) ; et
**caractérisé par**, lors de l'exécution de l'application d'annuaire (58) :
la réception d'une demande d'authentification (44) provenant d'un dispositif d'origine de demande (22) et dirigée vers l'application d'annuaire (58) ;
en réponse à la réception de la demande d'authentification (44), en exécutant un logiciel de couche réseau sans utiliser l'application d'annuaire (58), la retransmission de la demande d'authentification (44) vers un serveur de gestion de trafic (26) sur une connexion, amenant ainsi le serveur de gestion de trafic (26) à demander la fourniture d'une authentification par un utilisateur qui a lancé la demande d'authentification (44) ;
à la suite de la retransmission de la demande d'authentification (44), la réception de la demande d'authentification (44) du serveur de gestion de trafic (26) ;
en réponse à la réception de la demande d'authentification (44) du serveur de gestion de trafic (26), en exécutant le logiciel de couche réseau, le passage de la demande d'authentification (44) à l'application d'annuaire (58) ;
à la suite du passage de la demande d'authentification (44) à l'application d'annuaire (58), la réception d'une réponse (50) à la demande d'authentification (44) en provenance de l'application d'annuaire (58) ;
en réponse à la réception de la réponse (50) en provenance de l'application d'annuaire (58), en exécutant le logiciel de couche réseau sans utiliser l'application d'annuaire, la communication de la réponse au serveur de gestion de trafic ;
à la suite de la communication de la réponse au serveur de gestion de trafic, la réception de la réponse, sur la connexion, du serveur de gestion de trafic ; et
à la suite de la réception de la réponse du serveur de gestion de trafic (26), en exécutant le logiciel de couche réseau, la retransmission de la réponse au dispositif d'origine de la demande.

8. Procédé selon la revendication 7, dans lequel la retransmission de la demande d'authentification amène le serveur de gestion de trafic à demander la fourniture de l'authentification lorsque le serveur de gestion de trafic reçoit la réponse.

9. Procédé selon la revendication 7, dans lequel la réception de la demande d'authentification comprend la réception de la demande d'authentification au niveau d'un port particulier, dans lequel le logiciel de couche réseau comporte un traducteur d'adresses réseau configuré pour retransmettre toute communication reçue au niveau du port particulier vers le serveur de gestion de trafic, et dans lequel la retransmission de la demande d'authentification comprend la retransmission de la demande d'authentification à l'aide d'un traducteur d'adresses réseau.

10. Procédé selon la revendication 7, dans lequel la connexion est une première connexion, la demande d'authentification étant reçue du serveur de gestion du trafic sur une seconde connexion de telle sorte que la réponse est générée par l'application d'annuaire en association avec la seconde connexion, et dans lequel la communication de la réponse au serveur de gestion de trafic comprend la communication de la réponse au serveur de gestion de trafic en réponse au fait que la réponse est associée à la seconde connexion.

11. Procédé selon l'une quelconque des revendications 7 à 10, dans lequel la retransmission de la demande d'authentification comprend la retransmission de la demande d'authentification à travers un tunnel de réseau privé virtuel.

12. Procédé selon l'une quelconque des revendications 7 à 11, dans lequel l'application d'annuaire est choisie dans le groupe d'applications d'annuaire constitué : d'une application de services de domaine Active Directory, d'un centre de distribution de clés Kerberos et d'une application d'annuaire de protocole allégé d'accès d'annuaire.

13. Produit logiciel informatique comprenant un support tangible non transitoire lisible par ordinateur dans lequel des instructions de programme sont stockées, lesquelles instructions, lorsqu'elles sont lues par un processeur (38), amènent le processeur (38) à :
recevoir, au niveau d'une couche réseau d'un serveur, une demande d'authentification (44) provenant d'un dispositif d'origine de demande (22) et dirigée vers une application d'annuaire (58) exécutée par le processeur (38) ; et
**caractérisé en ce que** les instructions, lorsqu'elles sont lues par le processeur (38), amènent le processeur (38) à :
en réponse à la réception de la demande d'authentification (44), sans utiliser l'application d'annuaire (58), retransmettre la demande d'authentification (44) de la couche réseau vers un serveur de gestion de trafic (26) sur une connexion, amenant ainsi le serveur de gestion de trafic (26) à demander la fourniture d'une authentification par un utilisateur qui a lancé la demande d'authentification (44),
à la suite de la retransmission de la demande d'authentification (44), recevoir la demande d'authentification (44), au niveau de la couche réseau, du serveur de gestion de trafic (26),
en réponse à la réception de la demande d'authentification (44) du serveur de gestion du trafic (26), transmettre la demande d'authentification (44) de la couche réseau à l'application d'annuaire (58),
à la suite du passage de la demande d'authentification (44) à l'application d'annuaire (26), recevoir une réponse (50) à la demande d'authentification (44), au niveau de la couche réseau, de l'application d'annuaire (58),
à la suite de la réception de la réponse (50) de l'application d'annuaire (58), sans utiliser l'application d'annuaire (58), communiquer la réponse (50) de la couche réseau au serveur de gestion de trafic (26),
à la suite de la communication de la réponse (50) au serveur de gestion du trafic (26), recevoir la réponse (50) au niveau de la couche réseau, sur la connexion, du serveur de gestion de trafic (26), et
en réponse à la réception de la réponse (50) du serveur de gestion du trafic (26), retransmettre la réponse (50) de la couche réseau vers le dispositif d'origine de la demande.

14. Produit logiciel informatique selon la revendication 13, dans lequel la retransmission de la demande d'authentification amène le serveur de gestion de trafic à demander la fourniture de l'authentification lorsque le serveur de gestion du trafic reçoit la réponse.

15. Produit logiciel informatique selon la revendication 13 ou 14, dans lequel l'application d'annuaire est choisie dans le groupe d'applications d'annuaire constitué : d'une application de services de domaine Active Directory, d'un centre de distribution de clés Kerberos et d'une application d'annuaire de protocole allégé d'accès d'annuaire.
